# EUROPEAN PATENT SPECIFICATION

(11) **EP 3 632 753 B1**
(45) Date of publication and mention of the grant of the patent: **02.06.2021**
(21) Application number: 19201314.2
(22) Date of filing: 03.10.2019
(51) Int. Cl.: B60S 1/08, G01S 13/95

(54) **AIRCRAFT WINDSHIELD WIPER SYSTEM AUTOMATIC TURN ON AND CONTROL**
AUTOMATISCHES EINSCHALTEN UND STEUERN EINES FLUGZEUGWINDSCHUTZSCHEIBENWISCHERSYSTEMS
MISE SOUS TENSION ET COMMANDE AUTOMATIQUE DE SYSTÈME D'ESSUIE-GLACE DE PARE-BRISE D'AÉRONEF

(30) Priority: 03.10.2018 IN 201811037342
(43) Date of publication of application: 08.04.2020
(73) Proprietor: ROSEMOUNT AEROSPACE INC., Burnsville, MN 55306-4898 (US)
(72) Inventor: VENKATAMUNIBHASKARAN, Ramesh, 560048 Karnataka (IN); THIRUNARAYANA, Ashok Kumar, 560076 Karnataka (IN)
(74) Representative: Dehns

(56) References cited:
- CN-A- 105 620 424
- CN-A- 107 264 475
- DE-A1-102005 051 218
- US-A1- 2013 320 103
- US-B1- 8 742 974

## Description

### BACKGROUND

Exemplary embodiments pertain to the art of aircraft windshield wipers and, in particular, automatic turn on and control of such wipers Document CN 105 620 424 A discloses an aircraft wiper control system which is controlled by a rain sensor on the aircraft's windshield.

Windshield wipers of an aircraft are used for cleaning rain, sand, dust, etc. from a windshield. Generally, wipers includes a wiper arm that needs to move in both clockwise and counter-clockwise directions within a specific angle to keep the windshield clean for the Pilot/Co-pilot.

In a typical system, the wiper is turned ON by the Pilot/Co-Pilot manually to clear the Windshield. Based on the precipitation, the Pilot/Co-Pilot will be able to set the sweep speed at 60 or 120 Cycles per Minute (CPM). While controlling the aircraft, it may be tedious to turn on or change the speed of the wiper.

### BRIEF DESCRIPTION

Disclosed in a first aspect is an aircraft windshield wiper control system that includes an aircraft weather radar system that detects precipitation in a travel path of an aircraft. The system includes a wiper control module that receives information from the aircraft weather radar system and generates a wiper control signal based on the received information that controls operation of a motor drive of a wiper on the aircraft.

In one embodiment, an aircraft windshield wiper control assembly may include an aircraft weather radar system mounted in an aircraft and that detects precipitation in a travel path of an aircraft and an integrated avionics module that receives aircraft weather information from the aircraft weather radar system. The assembly also includes an aircraft wiper blade motor, a wiper blade motor driver, a wiper control module that receives aircraft weather information from the integrated avionics module and generates a wiper control signal, based on the received information, that controls operation of the wiper blade motor drive to cause motion of the aircraft wiper blade motor.

In a system or assembly of any prior embodiment, the radar system may detect precipitation levels in a portion of the path that is not being contacted by the aircraft.

In a system or assembly of any prior embodiment, the system may include a wiper control switch, the switch having an ON state that allows the wiper control module to provide the wiper control signal to the motor drive of the wiper on the aircraft and an OFF state that dis-allows the wiper control module to provide the wiper control signal to the motor drive of the wiper on the aircraft.

In a system or assembly of any prior embodiment, the wiper control module may be configured to receive an operation state of the aircraft and is enabled or disabled based on the received operational state.

In a system or assembly of any prior embodiment, the wiper control module may include a speed command generator that selects from one of at least speed settings for the motor drive based on the information received from the aircraft weather radar system and generates a speed reference.

In a system or assembly of any prior embodiment, the wiper control module may further includes a first summation unit that receives the speed reference from the speed command generator and produces an error signal output; and a proportional integral (PI) control unit that acts as a speed loop control element and outputs and outputs duty ratio commands based on the error signal output received from the summation unit.

In a system or assembly of any prior embodiment, the error signal output may be formed by comparing the speed reference to an actual speed of the motor.

In a system or assembly of any prior embodiment, the wiper control module may be disable based on a receiver operational state of the aircraft.

### BRIEF DESCRIPTION OF THE DRAWINGS

The following descriptions should not be considered limiting in any way. With reference to the accompanying drawings, like elements are numbered alike:
FIG. 1 is a perspective view of aircraft that can include one or embodiments of a wiper control system;
FIG. 2 is a system block diagram of wiper control system; and
FIG. 3 is a block diagram showing a motor drive system implemented as a closed-loop motor control system.

### DETAILED DESCRIPTION

A detailed description of one or more embodiments of the disclosed apparatus and method are presented herein by way of exemplification and not limitation with reference to the Figures.

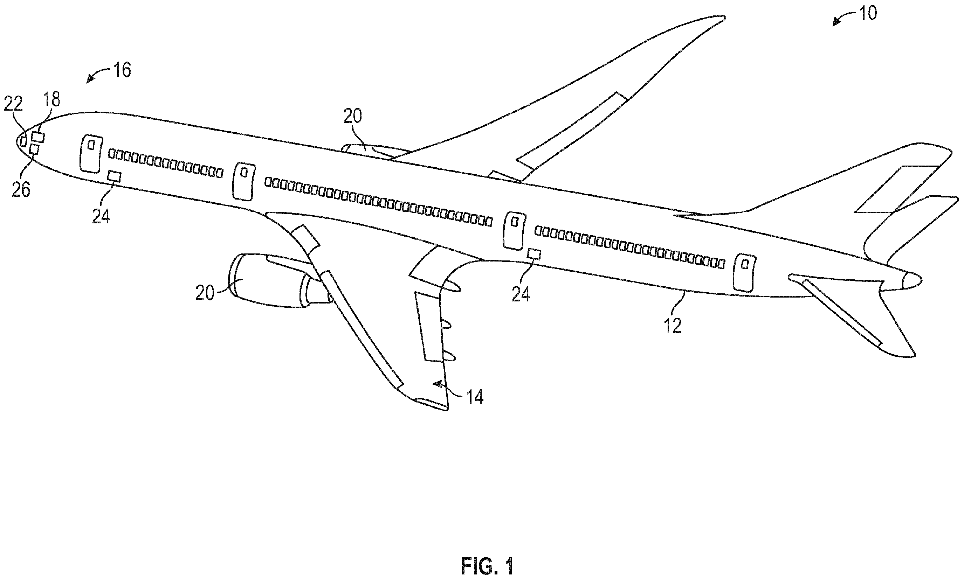

FIG. 1 is an example of aircraft 10 on which one or more embodiments of the present invention may be implemented. The aircraft 10 includes aircraft body 12 with wings 14 extending outwardly therefrom. As illustrated the wings support turbine engines 20 but other types of aircraft and rotorcrafts (e.g., helicopters) could include the wiper system described herein.

The aircraft 10 includes a cock-pit region 16 that includes one or more windscreens 18. The wiper system described herein provides for an automatic operation of a wiper blade across the windscreen 18 based on one or more of radar information related to weather and an operation status of the aircraft.

The aircraft 10 includes a radar system 22 and an aircraft integrated modular avionics (IMA) block 24. These two elements are currently present on most aircraft. The aircraft also includes a wiper control system 24 in contact with the IMA block 22. The wiper control system (or module) 26 can control an operation speed of the wiper blade(s) that clear the windscreen 18 based on radar information. In one embodiment, the radar information is weather radar information collected by the radar system 22. The information can be about precipitation in a flight path of the aircraft or precipitation that could enter the flight path of the aircraft. In one embodiment, the information is related to portion of the path that is not being contracted by the aircraft. That is, the information is about a region distanced away from the aircraft's current location.

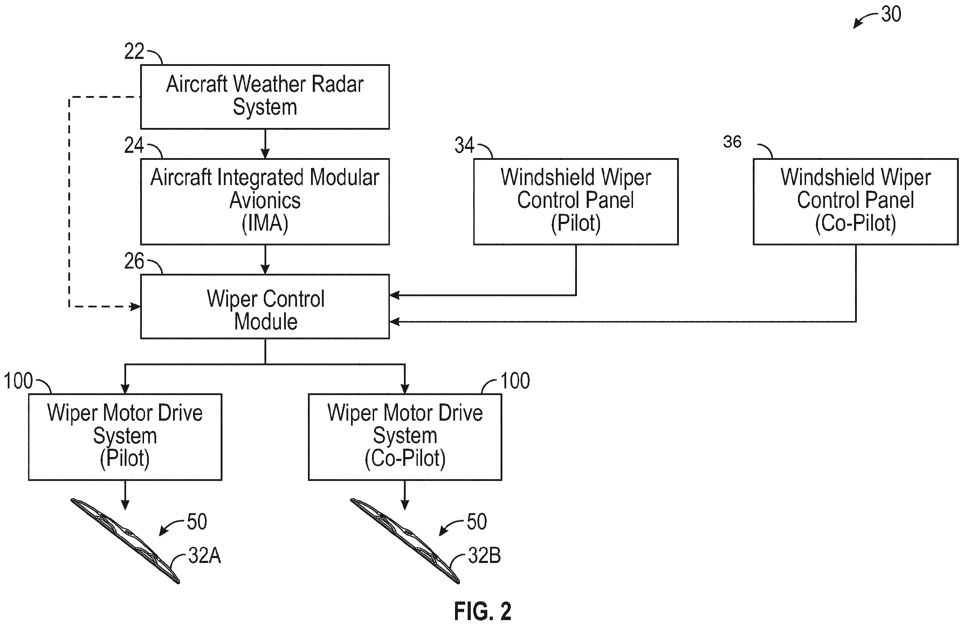

FIG. 2 shows a block diagram of a system 30 can be implemented to control operation of one or more wiper blades 32. As shown, there are two wiper blades, 32a, 32b. One can be for the pilot's windscreen (or the pilots side of a single windscreen) and the other for the co-pilots. However, two blades are not required and the system can be implement with only a single blade or more than two blades as will be understood by the skilled artisan based on the teachings herein. Each blade 32 can be controlled by a motor 50. The motor can be separate for each blade or a single motor could control both.

The motors 50 will receive motor drive signals from the wiper control module 26. The module 26 can be connected and control one or more motor drive units 100 that drive the motor 50 of each blade 32. In one embodiment, the motor drive units 100 are can be part of the module 26 or be separate units. The motors 50 can by any type of wiper motor.

The module 26 can, in one embodiment, be connected to an integrated module avionics (IMA) block 24. The IMA block 24 is, in current use, a monitoring systems to collect different types of data. The data can be collected to ensure the safety and reliability of the aircraft systems. The information gathered can also be used to target improvements to the functioning of the systems and maintenance to reduce the downtime for the aircrafts. These monitoring systems provide the ability to obtain inflight data as well as data generated during ground/taxi operations. As such, herein, the IMA block 24 represents the collection of center for data gathered by many sensors onboard an aircraft. The IMA block 24 can be connected to the sensors wired networks that include Ethernet, ARINC, CAN bus and so or by wireless connections.

One of the "sensors" that avionics IMA block 24 can receive data from an aircraft weather radar system 22. As illustrated, the weather information received by the IMA block 24 from the radar system 22 is provided to the control module 26. However, in alternative embodiment (shown by the dashed connection in FIG. 2) the radar system 22 can provide radar data directly to the control module 26.

In one embodiment, based on sensor readings or other information, the IMA block 24 can determine an operational state of the aircraft. In that instance, the state can be provided to the control module 26. In one or more states, the wiper control module 26 can be operational while in others it is not. For instance, while cruising the wiper control module 26 can be disabled (or at least the automatic portion thereof) and operational in all other states (e.g., takeoff, landing, taxing, climbing and descending).

Further, the system 30 can also include one or more switches that can manually enable or disable the wiper control module 26 and, thus, operation of the wipers. Examples of such switches are shown as pilot and copilot control switches 34, 36. These switches are coupled to the wiper control module 26.

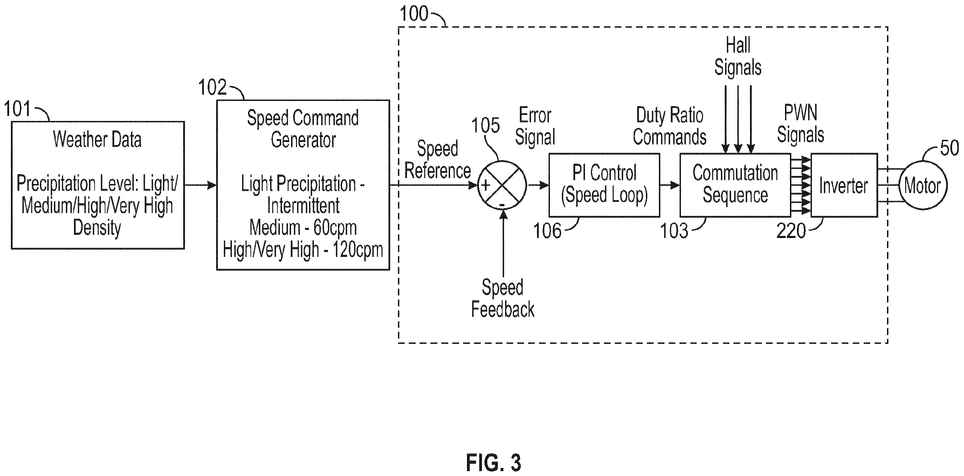

With reference to FIG. 3, an example of a motor drive system 100 implemented as a closed-loop motor control system to control operations of the wiper motor drive 50 is shown. The drive system 100 is configured to fine-tune speed and current loop gains to encourage relatively smooth wiper drive operations. In particular, the closed-loop control system 100 is configured to control speed and torque of the wiper motor 50 based on the speed and current loop gains such that they match a desired speed.

The control system 100 can receive information from a speed command generator 102 that receives a precipitation level indication 101 from the radar system 22. To that end, the speed command generator 102 can be part of the control module 26 of FIG. 2 in one embodiment.

The speed level created by the speed command generator 102 can include, for example, four precipitation density levels: Green (Light Density) where the desired operation is have the motor 50 drive the wiper intermittently. The rate can be preselected and in one embodiment is 1 second ON, 2 seconds off; Orange (Medium Density) where the wiper is driven at 60 Cycles per Minute; and Red (High) or Magenta (Very High) where the wiper is operated at 120 Cycles per Minute. Of course these are just examples and other levels/speeds can be utilized.

The speed command generator 102 signals are provided to a first summation unit 105, and then to a proportional integral (PI) control unit 106. The speed reference from the generator 102 is compared via summation unit 105 with a current motor speed feedback signal to generator an error signal. This error signal is used by the PI control unit. The PI control unit 106 acts as a speed loop control element and outputs duty ratio commands to a commutation sequence unit 103 that generates PWM signals for each phase of the wiper motor 50. As shown, an inverter 220 is included to convert the PWM signals into alternating current motor control signals. The communication sequence unit 103 can receive Hall effect sensor inputs in one embodiment.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft windshield wiper control system (30), **characterized in that** it comprises:
an aircraft weather radar system (22) that detects precipitation in a travel path of an aircraft (10); and
a wiper control module (26) that receives information from the aircraft weather radar system (22), generates a wiper control signal based on the received information, and controls operation of a motor drive of a wiper (32A, 32B) on the aircraft (10).

2. The system of claim 1, wherein the radar system (22) detects precipitation levels in a portion of the path that is not being contacted by the aircraft (10).

3. The system of claim 1 or 2, further comprising a wiper control switch (34, 36), the switch (34, 36) having an ON state that allows the wiper control module (26) to provide the wiper control signal to the motor drive of the wiper (32A, 32B) on the aircraft (10) and an OFF state that dis-allows the wiper control module (26) to provide the wiper control signal to the motor drive of the wiper (32A, 32B) on the aircraft (10).

4. The system of any preceding claim, wherein the wiper control module (26) is configured to receive an operational state of the aircraft (10) and is enabled or disabled based on the received operational state.

5. The system of any preceding claim, wherein the wiper control module (26) includes:
a speed command generator (102) that selects a speed setting for the motor drive based on the information received from the aircraft weather radar system (22) and generates a speed reference.

6. The system of claim 5, wherein the wiper control module (26) further includes:
a first summation unit (105) that receives the speed reference from the speed command generator (102) and produces an error signal output; and
a proportional integral (PI) control unit (106) that acts as a speed loop control element and outputs duty ratio commands based on the error signal output received from the summation unit (105).

7. The system of claim 6, wherein the error signal output is formed by comparing the speed reference to an actual speed of the motor drive.

8. The system of any preceding claim, wherein the wiper control module (26) is disabled based on a/the received operational state of the aircraft (10).

9. The system of any preceding claim, wherein the aircraft weather radar system (22) is mounted in an aircraft (10), and further comprising:
an integrated avionics module (24) that receives aircraft weather information from the aircraft weather radar system (22), wherein
the wiper (32A, 32B) is connected to the motor drive.

## Patentansprüche

1. Luftfahrzeugscheibenwischersteuersystem (30), **dadurch gekennzeichnet, dass** es Folgendes umfasst:
ein Luftfahrzeugwetterradarsystem (22), das Niederschlag auf einem Flugweg eines Luftfahrzeugs (10) detektiert; und
ein Wischersteuermodul (26), das Informationen von dem Luftfahrzeugwetterradarsystem (22) empfängt, ein Wischersteuersignal basierend auf den empfangenen Informationen erzeugt und den Betrieb eines Motorantriebs eines Wischers (32A, 32B) an dem Luftfahrzeug (10) steuert.

2. System nach Anspruch 1, wobei das Radarsystem (22) Niederschlagsmengen in einem Abschnitt des Weges detektiert, der nicht mit dem Luftfahrzeug (10) in Kontakt steht.

3. System nach Anspruch 1 oder 2, ferner umfassend einen Wischersteuerschalter (34, 36), wobei der Schalter (34, 36) einen EIN-Zustand, der dem Wischersteuermodul (26) ermöglicht, das Wischersteuersignal dem Motorantrieb des Wischers (32A, 32B) an dem Luftfahrzeug (10) bereitzustellen, und einen AUS-Zustand aufweist, der dem Wischersteuermodul (26) nicht ermöglicht, das Wischersteuersignal dem Motorantrieb des Wischers (32A, 32B) an dem Luftfahrzeug (10) bereitzustellen.

4. System nach einem der vorhergehenden Ansprüche, wobei das Wischersteuermodul (26) dazu konfiguriert ist, einen Betriebszustand des Luftfahrzeugs (10) zu empfangen, und basierend auf dem empfangenen Betriebszustand aktiviert oder deaktiviert wird.

5. System nach einem der vorhergehenden Ansprüche, wobei das Wischersteuermodul (26) Folgendes beinhaltet:
einen Geschwindigkeitsbefehlsgenerator (102), der eine Geschwindigkeitseinstellung für den Motorantrieb basierend auf den von dem Luftfahrzeugwetterradarsystem (22) empfangenen Informationen auswählt und eine Geschwindigkeitsreferenz erzeugt.

6. System nach Anspruch 5, wobei das Wischersteuermodul (26) ferner Folgendes beinhaltet:
eine erste Summierungseinheit (105), welche die Geschwindigkeitsreferenz von dem Geschwindigkeitsbefehlsgenerator (102) empfängt und eine Fehlersignalausgabe erzeugt; und
eine proportionale integrale (PI) Steuereinheit (106), die als Geschwindigkeitsregelkreiselement fungiert und Tastverhältnisbefehle basierend auf der von der Summierungseinheit (105) empfangenen Fehlersignalausgabe ausgibt.

7. System nach Anspruch 6, wobei die Fehlersignalausgabe gebildet wird, indem die Geschwindigkeitsreferenz mit einer tatsächlichen Geschwindigkeit des Motorantriebs verglichen wird.

8. System nach einem der vorhergehenden Ansprüche, wobei das Wischersteuermodul (26) basierend auf einem/dem empfangenen Betriebszustand des Luftfahrzeugs (10) deaktiviert wird.

9. System nach einem der vorhergehenden Ansprüche, wobei das Luftfahrzeugwetterradarsystem (22) in einem Luftfahrzeug (10) montiert ist, und ferner Folgendes umfassend:
ein integriertes Avionikmodul (24), das Luftfahrzeugwetterinformationen von dem Luftfahrzeugwetterradarsystem (22) empfängt, wobei der Wischer (32A, 32B) mit dem Motorantrieb verbunden ist.

## Revendications

1. Système de commande d'essuie-glace de pare-brise d'aéronef (30), **caractérisé en ce qu'**il comprend :
un système de radar météorologique d'aéronef (22) qui détecte les précipitations sur un trajet de déplacement d'un aéronef (10) ; et
un module de commande d'essuie-glace (26) qui reçoit des informations à partir du système de radar météorologique d'aéronef (22), génère un signal de commande d'essuie-glace sur la base des informations reçues et commande le fonctionnement d'un entraînement de moteur d'un essuie-glace (32A, 32B) sur l'aéronef (10).

2. Système selon la revendication 1, dans lequel le système de radar (22) détecte les niveaux de précipitations dans une partie de la trajectoire qui n'est pas en contact avec l'aéronef (10).

3. Système selon la revendication 1 ou 2, comprenant en outre un commutateur de commande d'essuie-glace (34, 36), le commutateur (34, 36) ayant un état de marche qui permet au module de commande d'essuie-glace (26) de fournir le signal de commande d'essuie-glace à l'entraînement de moteur de l'essuie-glace (32A, 32B) sur l'aéronef (10) et un état d'arrêt qui empêche le module de commande d'essuie-glace (26) de fournir le signal de commande d'essuie-glace à l'entraînement de moteur de l'essuie-glace (32A, 32B) sur l'aéronef (10).

4. Système selon une quelconque revendication précédente, dans lequel le module de commande d'essuie-glace (26) est configuré pour recevoir un état fonctionnel de l'aéronef (10) et est activé ou désactivé sur la base de l'état fonctionnel reçu.

5. Système selon une quelconque revendication précédente, dans lequel le module de commande d'essuie-glace (26) inclut :
un générateur de commande de vitesse (102) qui sélectionne un réglage de vitesse pour l'entraînement de moteur sur la base des informations reçues à partir du système de radar météorologique d'aéronef (22) et génère une référence de vitesse.

6. Système selon la revendication 5, dans lequel le module de commande d'essuie-glace (26) inclut en outre :
une première unité de sommation (105) qui reçoit la référence de vitesse à partir du générateur de commande de vitesse (102) et produit une sortie de signal d'erreur ; et
une unité de commande intégrale proportionnelle (PI) (106) qui agit comme un élément de commande de boucle de vitesse et émet des commandes de rapport cyclique basées sur la sortie de signal d'erreur reçue à partir de l'unité de sommation (105).

7. Système selon la revendication 6, dans lequel la sortie de signal d'erreur est formée en comparant la référence de vitesse à une vitesse réelle de l'entraînement de moteur.

8. Système selon une quelconque revendication précédente, dans lequel le module de commande d'essuie-glace (26) est désactivé sur la base d'un/de l'état fonctionnel reçu de l'aéronef (10).

9. Système selon une quelconque revendication précédente, dans lequel le système de radar météorologique d'aéronef (22) est monté dans un aéronef (10), et comprenant en outre :
un module avionique intégré (24) qui reçoit des informations météorologiques d'aéronef à partir du système de radar météorologique d'aéronef (22), dans lequel
l'essuie-glace (32A, 32B) est relié à l'entraînement de moteur.
